# EUROPEAN PATENT SPECIFICATION

(11) **EP 2 115 018 B1**
(45) Date of publication and mention of the grant of the patent: **02.11.2011**
(21) Application number: 08707570.1
(22) Date of filing: 06.02.2008
(51) Int. Cl.: C08F 210/18, C08L 23/16

(54) **ELASTOMERIC COMPOUND**
ELASTOMERVERBINDUNG
COMPOSÉ D'ÉLASTOMÈRES

(30) Priority: 08.02.2007 EP 07002711; 07.05.2007 EP 07009118
(43) Date of publication of application: 11.11.2009
(73) Proprietor: Lanxess Elastomers B.V., 6167 AC Geleen (NL)
(72) Inventor: VAN DOREMAELE, Gerardus Henricus Josephus, NL-6132 HN Sittard (NL); KRANENBURG, Mirko, NL-6215 JC Maastricht (NL); DULLAERT, Konraad, B-3001 Heverlee (BE)
(74) Representative: Herbold, Matthias
(86) International application number: PCT/EP2008/000903
(87) International publication number: WO 2008/095687

(56) References cited:
- EP-A1- 1 113 028
- WO-A-97/00291
- WO-A-98/56012
- WO-A-2005/005496
- LASAROV H ET AL: "ETHYLENE-NOBORNENE TERPOLYMERIZATION WITH 5-VINYL-2-NORBORNENE USING SINGLE-SITE CATALYSTS" MACROMOLECULAR: RAPID COMMUNICATIONS, WILEY VCH VERLAG, WEINHEIM, DE, vol. 22, no. 6, 5 April 2001 (2001-04-05), pages 434-438, XP001038812 ISSN: 1022-1336
- BHATTACHARJEE, SUSMITA ET AL: "Tailoring polymer molecular structure in the EPDM slurry process" RUBBER EXPO 2001, FALL TECHNICAL PROGRAM, 160TH, CLEVELAND, OH, UNITED STATES, OCT. 16-20, 2001 , 2391-2407 PUBLISHER: AMERICAN CHEMICAL SOCIETY, RUBBER DIVISION, AKRON, OHIO. CODEN: 69EGPM, 2001, XP009086388
- ELLUL, MARIA D. ET AL: "New highly-crosslinked TPEs based on VNB-EPDM with improved compression set" FALL TECHNICAL MEETING AND RUBBER MINI EXPO "04, AMERICAN CHEMICAL SOCIETY, RUBBER DIVISION, 166TH, COLUMBUS, OH, UNITED STATES, OCT. 5-8, 2004 , 1033-1047 PUBLISHER: AMERICAN CHEMICAL SOCIETY, RUBBER DIVISION, AKRON, OHIO. CODEN: 69GHIS, 2004, XP009086389
- BOOIJ, H. C.: "Long-chain branching and viscoelasticity of ethylene-propylene-diene elastomers" KAUTSCHUK GUMMI KUNSTSTOFFE ( 1991 ), 44(2), 128 -30 CODEN: KGUKAC; ISSN: 0022-9520, 1991, XP001536497 cited in the application

## Description

The invention relates to an elastomeric compound comprising at least one olefinic elastomer comprising ethylene, an α-olefin, from 1 to 7 wt% vinyl norbornene and from 0 to 15 wt% of a second non-conjugated polyene, wherein the wt% are related to the total weight of ethylene, α-olefin, vinyl norbornene and the second non-conjugated polyene, and which elastomer has long chain branching corresponding with Δδ <20, wherein Δδ, expressed in degrees, is calculated from the difference between the phase angle δ between stress and strain in a dynamic shear measurement at 125°C at a frequency of 0.1 rad/s and the phase angle δ at a frequency of 100 rad/s and the compound further comprising a solid filler and an oil, such that the compound has a compound loading between 120 and 300 phr.

The invention further relates to the preparation of an elastomeric compound suitable for extrusion and to extruded parts made from such compound.

Elastomeric polymers are generally processed in the form of a compound, wherein the polymer is mixed with fillers like carbon black and/or oil. Consequently, the processing of such a compound can be considered as processing of a solution of the polymer rather than processing of a melt thereof.

Typical phenomena that may occur when a polymer is extruded through a die are die swell and surface distortions such as sharkskin, slip-stick or even gross melt fracture. Compounds suitable for extrusion should not require high torques and pressures during processing and should not be prone to surface distortions. It is known that lower viscous products generally give rise to improved extrusion behavior. It is further known that, for elastomeric polymers with a certain Mooney viscosity, improved extrusion behavior can be achieved by selecting grades with long-chain branches. The amount of branching is expressed in terms of a Δδ-parameter as described by Booij in Kautschuk und Gummi Kunststoffe, (1991), 44:2, p128-130. In this article it has been shown that a lower value of Δδ indicates that the polymer has a higher amount of long chain branching. Consequently, elastomer polymers having low values of Δδ are preferably selected for making compounds suitable for a high throughput in extruding e.g. profiles. However, the polymerization/production of such highly branched polymers brings the risk of creating gel particles, which is undesirable.

Another requirement for a compound with good extrusion behavior is that it cures fast and to a high level. This can be obtained by an as high as possible level of vinyl norbornene in the elastomeric polymer. From WO2005/005496 it is known that elastomeric polymers can be made that include a high amount of VNB with a relatively low risk of forming gel particles by using a specific catalyst system based on a single site organometallic compound and an aluminoxane activator.

It is an object of this invention to provide an elastomeric compound that combines a high VNB concentration with an improved throughput during extrusion, in the substantial absence of extrudate distortion and with no or substantially no gel particles being present.

We have surprisingly found that a compound according to claim 1 exhibits an improved throughput during extrusion without extrudate distortions.

The elastomeric compound according to the invention comprises:
a) At least one olefinic elastomer comprising ethylene, an α-olefin, from 1 to 7 wt% vinyl norbornene and from 0 to 15 wt% of a second non-conjugated polyene, wherein the wt% are related to the total weight of ethylene, α-olefin, vinyl norbornene and the non-conjugated polyene. Ethylene and α-olefin amounts preferably range respectively between 50 and 75wt% for ethylene and between 20 and 50 wt% for propylene.
b) The elastomeric compound according to the invention further has a compound loading of between 120 and 300 phr, which means that in addition to 100 phr of the olefinic elastomer, the compound further comprises 20 to 200 phr of other compounding ingredients of which at least an oil, a solid filler, and a curing package.
c) The olefinic elastomer in the compound of the invention generally has a long chain branching long chain branching corresponding with Δδ <20, wherein Δδ, expressed in degrees, is calculated from the difference between the phase angle δ between stress and strain in a dynamic shear measurement at 125°C at a frequency of 0.1 rad/s and the phase angle δ at a frequency of 100 rad/s.
d) The olefinic elastomer in the compound of the invention further satisfies the following relation S_{b} > 30, wherein is the dilution slope S_{b}, as described in the experimental part.

The dilution slope S_{b} is a parameter described as g_{ø} by B. J. Crosby, M. Mangnus, W. de Groot, R. Daniels and T. C. B. McLeish in "Characterization of long chain branching: Dilution rheology of industrial polyethylenes", Journal of Rheology -- March 2002 -- Volume 46, Issue 2, pp. 401-426 to characterize the branching architecture of polymers from their solution properties.

The inventors surprisingly found that compounds according to the invention based on olefinic elastomers or a blend of olefinic elastomers with a dilution slope of more than 30, preferably more than 32, even more preferably more than 34 and most preferable more than 35, show significant lower surface instabilities during extrusion, which directly results in a higher throughput during extrusion without surface instabilities.

The compound of the invention preferably comprises, in addition to the olefinic elastomer,
a) a solid filler. Suitable solid fillers to be used in the compound of the invention are e.g. carbon black, silica, whiting, aluminum and magnesium silicates, quartz, chalk, and talk, said filler present in said olefinic elastomer compound in the range of from 10 to 190 parts, preferably from 10 to 100 parts per hundred parts olefinic elastomer(phr),
b) from 10 to 190 phr, preferably from 10 to 100 parts of an oil e.g. parafinic oil or white oil.

Compounds in the above-mentioned range show a significant lower die swell and reduced extrudate distortions. Below a compound loading of 120 phr the effect of the compound loading on the extrusion behaviour is negligible. Above a compound loading of 300 phr the effect of the olefinic elastomer in the compound is too limited.

Another advantage of the compound of the invention is, that at a certain level of long chain branching of the olefinic elastomer, corresponding to a certain Δδ, the amount of VNB in the olefinic elastomer is much higher than for the known VNB comprising olefinic elastomers. This results in a higher cure rate, and higher crosslink density for the olefinic elastomers according to the invention. The advantage of a higher crosslink density is expressed in better compression set properties.

A further advantage of the compound of the invention is, that these compounds are substantially free of gel particles.

The olefinic elastomer in the compound according to_the_invention preferably has a Mooney viscosity [ML(1+4)125°C] in the range of from 20 to 130. An elastomer with a Mooney viscosity of more than 20 comprises a sufficient amount of branches to obtain the effect of the invention. The effect of the invention above a Mooney viscosity value of 130 is not excluded, but economically unattractive because of reactor fowling during production of the elastomeric polymer. An ML(1+4)125°C) is difficult to measure above a value of about 90. Above an ML(1+4)125°C the Mooney value is preferably measured at 150°C. An upper limit of 130 ML(1+4)125°C corresponds with a ML(1+4)150°C of about 90 MU.

The effect of the invention at low compound loadings is most pronounced if the polymer Mooney viscosity (ML(1+4)125°C) lies in the range from 60 to 90 MU.

The invention further relates to a method for the preparation of a compound according to claim 1. This method is characterized by the features of claim 3.

The invention further relates to an extruded part comprising the cured compound of the invention. An extruded part comprising the cured compound of the invention can be obtained by adding to the compound a sufficient amount of a known curing agent, after which the mixture is extruded and cured by methods known to somebody skilled in the art.

WO2005/005496 discloses that the type of catalyst can have a strong influence on the amount of long chain branching. This invention shows that modifications of the ligands within the group of single site catalysts according to formula 1, may even influence the type of long chain branches.

A suitable olefinic elastomer to be used in the compound of the invention can be prepared by polymerizing at least ethylene, an alpha-olefin, between 1 and 7 wt%, preferably 1.5 - 5 wt%, more preferably 2 - 4 wt% of vinyl norbornene and optionally between 0 and 15 wt% of a second non-conjugated monomer in the presence of a catalyst system comprising:
a metal-organic compound of the following formula: 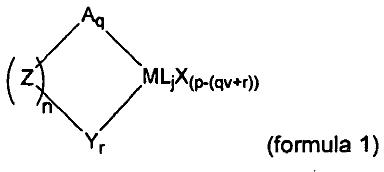 where:
M is a metal of group 3 -13 or the lanthanide series, and p is the valency of the metal M;
A represents a neutral or anionic spectator ligand whose valency v is 0,1 or 2, and q is an integer denoting the number of spectator ligands A;
Z is an optional bridging moiety, and n is the integer number of parallel bridging moieties Z;
Y is an amidine-containing spectator ligand represented by formula 2: 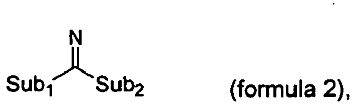
wherein the amidine-containing ligand is covalently bonded to the metal M via the imine nitrogen atom, Sub₁ is a substituent, which comprises a group 14 atom through which Sub₁ is bonded to the imine carbon atom. Sub₂ is a substituent, which comprises a heteroatom of group 15-16, through which Sub₂ is bonded to the imine carbon atom,;
r is an integer > 0;
L is an optional neutral Lewis basic ligand, and j is an integer denoting the number of neutral ligands L, and
X is an anionic ligand that may be independently selected from the group consisting of hydride, halide, alkyl, silyl, germyl, aryl, amide, aryloxy, alkoxy, phosphide, sulfide, acyl, pseudo halides such as cyanide, azide, and acetylacetonate, or a combination thereof. and a cocatalyst comprising an aluminoxane.

Preferably the compound according to formula 2 is (NC(2,6-F₂Ph)(ⁱPr₂N). With the catalyst based on this ligand, an elastomeric polymer can be produced with 3.5 wt% of VNB and a S_{b} of more than 40.

### Experimental methods

### Determination of the Mooney viscosity

The measurement of Mooney viscosity, i.e. Mooney viscosity ML₁₊₄ (125°C)], is defined according to the standard ASTM D-1646, herein incorporated by reference. In ASTM D-1646, it is stated that the Mooney viscosity is not a true viscosity, but a measure of shearing torque over a range of shearing stresses. Measurement of Mooney viscosity is also described in the Vanderbilt Rubber Handbook, 13th Ed., (1990), pages 565-566.

### Determination of Δδ

The phase angle δ between stress and strain in a dynamic shear measurement was determined as a function of the angular frequency ω in between 10⁻¹ and 100 rad/s on a stress-controlled rheometer (MCR300, Paar-Physica). All measurements were performed at 125°C under a nitrogen atmosphere, using a parallel plate geometry (diameter and gap of respectively 25 mm and 1.5 mm) in shear at strain amplitudes below 15%.

For the undiluted elastomer Δδ, expressed in degrees, is calculated from the difference between the phase angle δ at a frequency of 0.1 rad/s and the phase angle δ at a frequency of 100 rad/s [H.C. Booij, Kautschuk + Gummi Kunststoffe, Vol. 44, No. 2, pages 128-130, 1991].

### Determination of the dilution slope S_{b}

Rheological measurements (frequency sweeps) were performed on a stress-controlled rheometer (MCR300, Paar-Physica). All measurements were performed at 125°C under a nitrogen atmosphere, using a parallel plate geometry (diameter and gap of respectively 25 mm and 1.5 mm) in shear.

At strain amplitudes below 15%, the phase angle δ between stress and strain and the ratio of the stress and strain amplitudes, i.e. the dynamic shear modulus G_{d}, were determined as a function of the angular frequency ω in between 10⁻⁴ and 100 rad/s. These measurements were carried out on different volume fractions (Φ) of the elastomer between 100 (i.e. the undiluted elastomer) and about 20 % in a squalane solvent.

Solutions were prepared by first dissolving the sample material in an excess of white spirit. In order to homogenize this solution, the mixture was stirred for 24 hours with a magnetic stirrer. Then the required amounts of squalane were added to obtain the different volume fractions. Finally, all traces of white spirit were removed by placing the mixtures under vacuum at 70 °C for 48 hours. Squalane (C₃₀H₆₂), a short chain alkene, was chosen as solvent due its high boiling temperature (T_{boil} = 200 °C). White spirit (T_{boil} = 35 °C) was used as a co-solvent to facilitate the dissolving process of the polymer and thereby improving the homogeneity of the dilutions.

The dilution slope is determined from dynamic mechanical measurements on solutions having polymer volume fractions such that the phase angle at 0.0001-0.1 rad/s lies in the range of 60-90 degrees. For this purpose, at least three polymer concentrations are required (typically for high Mooney polymers between 10 and 50 wt% of polymer in solvent and for low Mooney polymers typically between 50 and 90 wt% of polymer.).

According to Crosby B.J., Mangnus M., de Groot W., Daniels R. and McLeish T.C.B., "Characterization of long chain branching: Dilution rheology of industrial polyethylenes, J. Rheol., 46(2), 401-426 (2002) the low frequency part (ω< 1 rad/s) of the curves of δ versus ω can be shifted along the logarithmic frequency axis (using a shift factor a_{c}) to coincide with each other. For this purpose, the curve at the highest volume fraction of the polymer is selected as reference. The natural logarithm of the shift factor a_{c}, thus determined, satisfies the following relation: In(a_{c}) = S_{b} Φ, where S_{b} is the dilution slope and φ the volume fraction of elastomer. The dilution slope is determined by linear regression of In(a_{c}) vs. Φ.

### Polymer used

### Polymers 1- 8 and 10

Olefinic elastomers used in the Comparative Examples are commercial graded from DSM (polymers 1- 8 and 10).

### Polymers 9 (105173b)

Polymer 9 was made according to the described polymerisation procedure on lab scale using a Vanadium based Ziegler Natta catalyst. A VOCI3 solution in hexane was fed into the reactor and ethylaluminium sesquichloride (SEAC) solution in hexane was fed into the pre-cooled monomer stream. The molar ratio between VOCI3 and SEAC was 8 and the reactor temperature was 45°C.

### Polymer 11 (04289a)

Polymer 11 was made according to the described polymerisation procedure on lab scale using catalyst A.

### Description catalyst A:

η⁵-(perfluorophenylcyclopentadienyl)(tri-*tert*-butylphosphinimine) titanium dimethyl.

To an orange mixture of C₆F₅CpTiCl₃ (1.00 g, 2.59 mmol) and t-Bu₃PClNH₂ (0.68 g, 2.59 mmol) in toluene (60 mL) and THF (20mL) was added a MeMgBr solution in ether (3.0M, 4.0 mL, 12 mmol) at -20°C. The reaction mixture was stirred for 45 minutes and subsequently dried in vacuo. The residue was extracted with boiling ligroin (20 and 40 mL respectively). The solvents were removed in vacuo resulting in 1.33 g (98%) of (Cp-C₆F₅)Ti(NP(t-Bu)₃)Me₂ with no detectable amounts of by-product.

### Polymers 12-22

Polymers 12-22 were made according to the described polymerisation procedure on lab scale using catalyst B.

### Polymers 11- 19

Polymers 11-19 were prepared using MMAO7 (modified methyl aluminoxane purchased from Akzo-Nobel, with typical Al content of 7wt% in Isopar E and 2,6-di-tert-butyl-4-methylphenol (BHT).

### Polymers 20-21

Polymers were prepared using trytilium tetrakis(perfluorophenyl) borate (TBF20) in combination with MMAO-7/BHT.

### Polymer 22

Polymer 22 was prepared using = trytilium tetrakis(perfluorophenyl) borate (TBF20) in combination with tri-isobutyl aluminium (TIBA).

### Synthesis of Me₅CpTiCl₂(NC(2,6-F₂Ph)(ⁱPr₂N); catalyst B

Me₅CpTiC1₃ (7.24g, 25 mmol) and N,N-diisopropyl-2,6-difluorobenzamidine (6.05g, 25.2 mmol) were dissolved in toluene (150 mL). Next, triethylamine (4.0 mL, 2.9 g, 29 mmol) was added and the reaction mixture was stirred for 18 hours. The reaction mixture was filtered and the residue was rinsed once with toluene (60 mL). The solvent of the combined organic phases was removed in vacuo. The residue was triturated with hexane (60 mL) once resulting in 12.18 g (99%) orange powder (Me₅CpTiCl₂(NC(2,6-F₂Ph)(ⁱPr₂N)).

A solution of methylmagnesiumbromide (16.5 mL, 3.0M solution in diethylether, 49.5 mmol) was added to a solution of Me₅CpTiCl₂(NC(2,6-F₂Ph)(ⁱPr₂N) (12.18g, 24.7mmol) in toluene (100 mL) at -78°C. The reaction mixture was stirred at room temperature for 18 hours. The reaction mixture was filtered and the solvent from the filtrate was removed in vacuo. The residue was triturated with hexane (100mL) resulting in 10.9 g of pure product as a yellow powder of Me₅CpTiCl₂(NC(2,6-F₂Ph)(ⁱPr₂N) (97%).

### Polymer 23

Polymer 23 was made on lab scale with a "Constrained Geometry Catalyst" (Catalyst C) Me2SiC5Me4(N-t-Bu)TiMe2., purchased from Degussa. Tri-octylaluminum (TOA) was used as scavenger and TBF20 as activator.

### Polymer 24

Polymer 24 is a commercial grade, purchased from Exxon.

### Polymers 25-28

Polymers 25 through 28 are commercial grades purchased from Mitsui (polymer 25) and Sumitomo (polymers 26 - 28).

### Polymerisation procedure on lab scale

The polymerisation was carried out in a solution polymerisation reactor with a volume of 3L. The feed streams were purified by contacting with various absorption media to remove catalyst-killing impurities such as water, oxygen and polar compounds as is known to those skilled in the art.

The process is continuous in all feed streams. Premixed hexane (C6), propene, ethylene, dienes (5-ethylidene-2-norbomene (ENB), 5-vinyl-2-norbornene (VNB), 1,9-decadiene and/or norbornadiene (NBND), hydrogen, were precooled before being fed to the reactor.

The catalyst components were dosed to the reactor as solutions in hexane, except for T-BF20, which was dosed as a solution in toluene.

The olefinic elastomer solution was continuously removed through a discharge line where a solution of Irganox-1076 in iso-propanol was added and subsequently worked-up by continuously steam stripping. EPDM was obtained after batch wise drying of the olefinic elastomer on a mill. The olefinic elastomers were analyzed amongst other methods by using FT-IR for composition, Mooney viscosity (ML(1+4) 125°C) and SEC-DV for the molecular weight and molecular weight distribution.

**Table 1: The dilution slope (S_{b}) and Δδ for a series of different elastomers.**

| **number** | **polymer** | **cat** | **activator** | **ML** | **C2 wt%** | **third mon.** | **wt% third mon.** | **Dd** | **S_{b}** |
|---|---|---|---|---|---|---|---|---|---|
| 1 | K520 | Z-N | SEAC | 46 (125°C) | 58 | DCPD | 4.5 | 8 | 26 |
| 2 | K4802 | 2-N | SEAC | 77 (125°C) | 52 | ENB | 4.3 | 27 | 15 |
| 3 | K820 | Z-N | SEAC | 74 (125°C) | 58 | DCPD | 4.5 | 4 | 28 |
| 4 | K8340A | Z-N | SEAC | 80 (125°C) | 55 | ENB | 5.5 | 9 | 28 |
| 5 | K7506 | Z-N | SEAC | 70 (125°C) | 57 | ENB | 4.5 | 16 | 29 |
| 6 | K5508 | Z-N | SEAC | 55 (125°C) | 70 | ENB | 4.6 | 21 | 22 |
| 7 | K39F | Z-N | SEAC | 54(150°C) | 52.5 | ENB | 9 | 17 | 24 |
| 8 | K27 | Z-N | SEAC | 70 (125°C) | 54 | ENB | 5 | 20 | 19 |
| 9 | 05173b | Z-N | SEAC | 82 (125°C) | 56.5 | VNB | 3.3 | 1 | 28 |
| 10 | K6622A | Z-N | SEAC | 67 (125°C) | 68 | ENB | 2.4 | 12 | 22 |
| 11 | 04289a | A | MAO | 124(125°C) | 55 | VNB | 1.8 | 11 | 60 |
| 12 | 05018a | B | MAO | 87(125°C) | 49.2 | VNB | 2.7 | 16 | 34 |
| 13 | 05401A | B | MAO | 87(125°C) | 48.6 | VNB | 3.5 | 8 | 45 |
| 14 | 05111a | B | MAO | 69 (125°C) | 65.6 | VNB | 0.45 | 33 | 19 |
| 15 | 04564b | B | MAO | 66 (125°C) | 65.1 | VNB | 1.7 | 12 | 32 |
| 16 | 05122b | B | MAO | 53(125°C) | 70 | VNB | 3.2 | 2 | 37 |
| | | | | | | | 0.2 | | |
| 17 | 05088a | B | MAO | 76(125°C) | 47.8 | NBND | (+0.4w% VNB) | 15 | 20 |
| 18 | 05113c | B | MAO | 70 (125°C) | 63.2 | NBND | 0.15 | 12 | 30 |
| | | | | | | | 0.4 | | |
| 19 | 05155c | B | MAO | 79(125°C) | 52 | 1.9-decadiene | (+1w% VNB) | 16 | 20 |
| 20 | 04570c | B | T-BF | 67 (125°C) | 65.7 | VNB | 0.4 | 12 | 27 |
| 21 | 05083a | B | T-BF | 79(125°C) | 49.8 | VNB | 0.5 | 11 | 29 |
| 22 | 05333a | B | T-BF | 54(125°C) | 68.9 | VNB | 0.2 | 20 | 21 |
| 23 | 05003A Vistalon | CGC | T-BF | 68 (125°C) | 64.2 | ENB | 2.7 | 14 | 21 |
| 24 | 7500 | Z-N | Al-alkyl | 91 (125°C) | 52.3 | ENB | 5.7 | 12 | 27 |
| 25 | EPT4045 ESPRENE | Z-N | Al-alkyl | 45 (100°C) | 53.4 | ENB | 7.6 | 16 | 16 |
| 26 | 505A ESPRENE | Z-N | Al-alkyl | 47 (100°C) | 45.3 | ENB | 9.5 | 10 | 19 |
| 27 | 501A ESPRENE | Z-N | Al-alkyl | 44 (100°C) | 49.9 | ENB | 4 | 15 | 19 |
| 28 | 505 | Z-N | Al-alkyl | 59 (125°C) | 45 | ENB | 10 | 10 | 28 |

### Determination of amount of gel particles

A fixed amount of EPDM polymer, in this case 10 grams, is mixed with an excess of white spirit (i.e. 500 ml). This mixture is stirred with a magnetic stirrer and held at 50°C for three days. Possible gel particles are removed by passing the mixture through two types of filters. The first one having a pore size of 1 mm, while the pore size of the second one is 100 µm. The extract is then placed under vacuum at 80°C for three days. The weight of the thus obtained residue divided by the initial amount of polymer is taken as measure for the weight percent of gel particles, present in the polymer.

The amount of gel particles was measured in polymer 9 and in polymer 16. Both polymers have the same approximate Δδ-value and VNB percentages (see table 1). The result is given in table 2.

**Table 2: Amount of gel particles**

| Polymer | Weight % gel particles |
|---|---|
| 9 | 9.4 |
| 16 | 0.05 |

These results demonstrate that polymers suitable for the compounds according to the invention, have a substantially lower level of gel particles than polymers with an equal amounts of third monomer, but with a dilution slope S_{b} of less than 30.

### Example 1 and comparative Experiments A and B

Polymers 12, 13, 15 and 16 are examples of suitable olefinic elastomers for the compounds according to the invention. While the other elastomers, denoted in Table 1, serve as olefinic elastomers in comparative examples.

### Preparation of the compounds

In order to illustrate the effect of the dilution slope of the elastomer on the resulting extrusion behaviour of a compound, three different elastomers were selected, namely from polymers 2 (K4802; S_{b} = 15), 5 (K7506, S_{b} = 29) and polymer 12 (05018a; S_{b} = 34). The first two polymers (2 and 5) are used for comparative experiments A and B, while polymer 12 is used for Example 1. For each of these elastomers a compound with a compound loading of 250 phr was prepared according to a composition as given in Table 3.

**Table 3**

| Ingredient | phr | comment |
|---|---|---|
| Polymer | 100 | |
| N-550 | 88 | carbon black |
| Sunpar 2280 | 52 | processing oil |
| ZnO | 5 | activator for sulfur cure |
| Stearic Acid | 1 | processing aid |
| CaO | 4 | drying agent |
| Total phr | 250 | |

### Determination of extrusion stability and surface distortions

The extrusion stability of a compound was assessed by means of a piston velocity-controlled capillary rheometer (Rheograph 6000, Göttfert - software: Winrheo version 3.5). All experiments were done at 70°C using a capillary die with a length of 10 mm, a diameter of 2 mm and an entrance angle of 60°. The diameter of the reservoir is 12 mm.

In order to homogenize the temperature of the EPDM compound, the material is allowed to rest for 15 minutes after it is loaded into the reservoir. After this period, a constant piston velocity is applied until a steady state pressure is measured. The steady state pressure is defined by the software as the value of the pressure at which further variations in pressure are smaller than 1 % after a specific time step. This time step is defined as *10*/*vₚ*+2 seconds, where *vₚ* is the applied piston velocity in mm/s. The throughput in the steady state is calculated as πd²vₚ/4, wherein d is the diameter of the die. At the steady state condition a piece of extrudate is collected. This procedure is repeated for different, increasing values of the piston velocity. The acquired extrudates are allowed to relax at room temperature during 1 hour, after which micrograph pictures of the relaxed extrudates were taken with a video microscope (microviper).

### Results

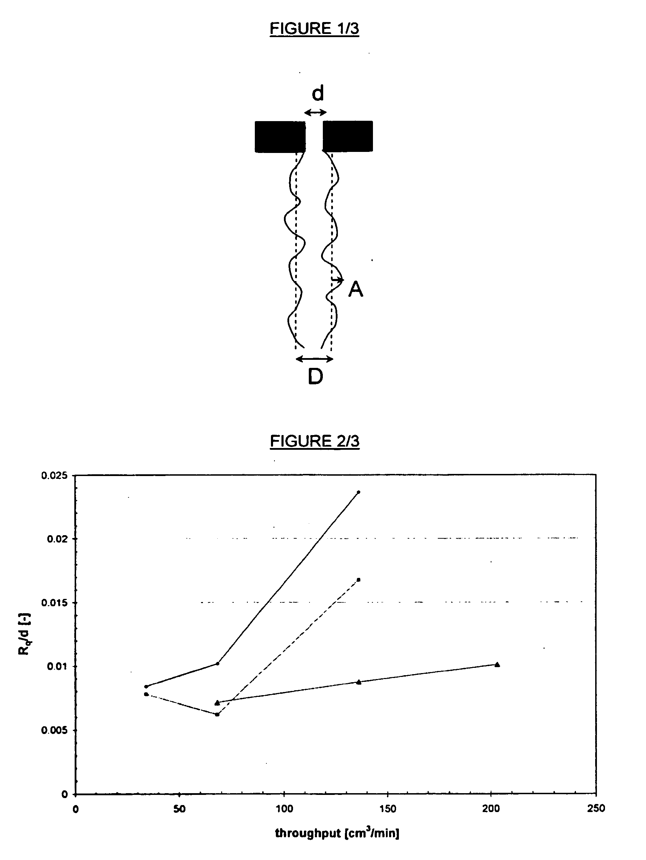

Optical micrographs of the extrudates of respectively comparative examples K4802 and K7506 and Example 1 (polymer nr 12) taken from extrudates at different throughputs were scanned. With a computer program the width of the extrudate was determined over a length of 20 mm. From these date the Roughness of the extrudate was calculated as R_{q}/d, wherein Rq is the average deviation A from the average extrudate diameter D, extruded from a die with a diameter d as illustrated in Figure 1. The results are given in Figure 2 for K4802 (◆), K7506 (■) and polymer nr 12 (▲)

### Conclusion extrudates surface

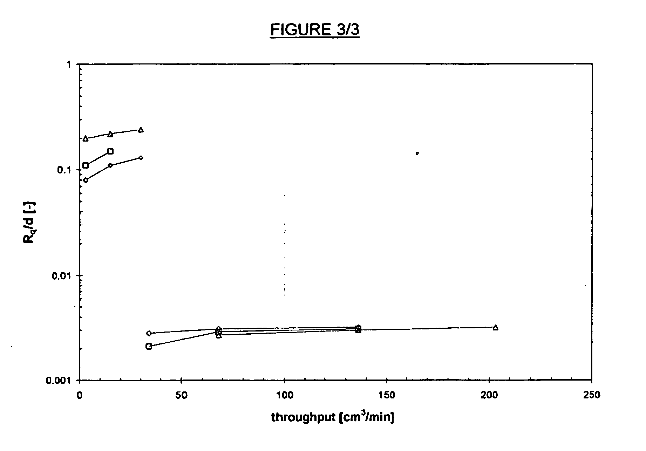

Fig. 2 shows the Roughness versus the throughput of the extrudate. This Figure clearly demonstrate that the compound of this invention displays significantly less extrudate distortions at high throughput, compared to the distortions of the extrudates of the Comparative Examples A and B. The compound according to the invention remained stable even at a throughput of 213 cm³/min.(fig 3(c)).

### Examples 2 - 4 and Comparative example C

### Determination of compression set:

The compression set is measured in accordance with ISO 188 type B .at 180°C

### Results

The compound recipes for examples 2- 4, containing a blend of polymers 12 and 16, and for comparative example C (blend of polymers 3 and 4) are shown in Table 4. Examples 2 - 4 contain different amounts of peroxide (Perkadox 14-40 MB).

**Table 4: Compound recipes for assessment of curing behaviour**

| Description | Example 2 | Example 3 | Example 4 | Example C |
|---|---|---|---|---|
| Descr. | **4.5phr Peroxide** | **3.6phr Peroxide** | **2.7phr Peroxide** | **ZN Reference 4.5phr Peroxide** |
| Polymer 12 | 60.00 | 60.00 | 60.00 | |
| Polymer 16 | 68.00 | 68.00 | 68.00 | |
| Polymer 4 | | | | 60.00 |
| Polymer 3 | | | | 68.00 |
| Whiting Omya BSH | | | | |
| Carbon black N-550 | 75.00 | 75.00 | 75.00 | 75.00 |
| Carbon black N-772 | | | | |
| Par.oil Flexon 876 | | | | |
| Struktol WB 212 | | | | |
| TMQ (A. Resin D) | 1.00 | 1.00 | 1.00 | 1.00 |
| **Perkadox 14-40 MB** | **4.50** | **3.60** | **2.7** | **4.50** |
| TAC-70 | | | | |
| PEG | 4.00 | 4.00 | 4.00 | 4.00 |
| MgO (M. DE) | 4.00 | 4.00 | 4.00 | 4.00 |
| Carbon black Dur O | 20.00 | 20.00 | 20.00 | 20.00 |
| Al-silicate S. N85 | 15.00 | 15.00 | 15.00 | 15.00 |
| Tudalen B-8014 | 7.00 | 7.00 | 7.00 | 7.00 |
| EDMA-70 (R.EDMA) | 2.00 | 2.00 | 2.00 | 2.00 |
| DHBP-40 (T. 101) | 3.50 | 2.80 | 2.80 | 3.50 |
| Protektor G3108 | 1.50 | 1.50 | 1.50 | 1.50 |
| **Total phr** | **265.50** | **263.90** | **263.90** | **265.50** |

**Table 5: Compression set data for four different compounds**

| Description | Example 2 | Example 3 | Example 4 | Example C |
|---|---|---|---|---|
| Descr. | **4.5phr Peroxide** | **3.6phr Peroxide** | **2.7phr Peroxide** | **ZN Reference 4.5phr Peroxide** |
| Test time [h] | 22 | 22 | 22 | 22 |
| Test temp. [°C] | 160 | 160 | 160 | 160 |
| Results | | | | |
| **Set 5 sec [%]** | **32** | **38** | **49** | **40** |
| **Set 60 min [%]** | **27** | **31** | **37** | **33** |
| Test time [h] | 22 | 22 | 22 | 22 |
| Test temp. [°C] | 70 | 70 | 70 | 70 |
| Results | | | | |
| **Set 5 see [%]** | **14** | **16** | **29** | **21** |
| **Set 60 min [%]** | **10** | **12** | **18** | **15** |

The result from the compression set experiments, done both at 70°C and 160°C, are shown in Table 5. As can be observed in this table, the compression set results at equal amounts of peroxide are significantly lower and hence better for example 2 than for the comparative example C. Furthermore, this table demonstrates that the compounds according to this invention, despite lower levels of peroxide (e.g. example 3), can even exceed the compression set performance of other compounds (comparative example C).

### Example 5 and Comparative Example D

### Extrusion experiments

In this Example a compound according to the invention based on polymer 12, available as DE6002^{™} (similar to 05018a) was compared with a compound based on K8340A^{™}, both commercial products of Koninklijke DSM N.V. (Netherlands) in a low filled wiper blade composition given in Table 6.

**Table 6**

| Experiment/Comp. example | 5 | D |
|---|---|---|
| EPDM DE 6002 | | 100 |
| EPDM KELTAN 8340A | 100 | |
| ZnO-active | 4 | 4 |
| Stearic acid | 0.7 | 0.7 |
| CaO-80 (K. GR/DAB) | 8 | 8 |
| Carbon black N-550 | 105 | 105 |
| Carbon black N-990 | 40 | 40 |
| N-Oil Nyflex 222b | 40 | 40 |
| | | |
| *Total phr* | 297.7 | 297.7 |

The Moony of these compounds according ISO 289 at 100 and 125 °C are given in Table 7.

**Table 7**

| Experiment | | 5 | D |
|---|---|---|---|
| Test temp. | [°C] | 100 | 100 |
| Initial | [MU] | 167.2 | 175.4 |
| ML | [MU] | 132.21 | 121.49 |
| Slope | [IM/Is] | 0.4654 | 0.5065 |
| | | | |
| Test temp. | [°C] | 125 | 125 |
| Initial | [MU] | 133.9 | 131.6 |
| ML | [MU] | 93.90 | 84.72 |
| Slope | [IM/Is] | 0.5038 | 0.4947 |

Table 8 shows the results of the Garvey die test according to ASTM 2230.

**Table 8**

| Experiment | | 5 | D |
|---|---|---|---|
| Speed | [rpm] | 30 | 30 |
| Output | [gr/mi] | 206 | 208 |
| Die swell | [%] | 28 | 19 |
| * Swelling | | 4 | 4 |
| * 30° Edge | | 4 | 4 |
| * Surface | | 4 | 4 |
| * Corners | | 3 | 4 |
| | | | |
| Speed | [rpm] | 50 | 50 |
| Output | [gr/mi] | 308 | 374 |
| Die swell | [%] | 41 | 41 |
| * Swelling | | 3 | 3 |
| * 30° Edge | | 4 | 4 |
| * Surface | | 4 | 4 |
| * Corners | | 3 | 4 |
| | | | |
| Speed | [rpm] | 70 | 70 |
| Output | [gr/mi] | 426 | 490 |
| Die swell | [%] | 32 | 28 |
| * Swelling | | 4 | 4 |
| * 30° Edge | | 4 | 4 |
| * Surface | | 4 | 4 |
| * Corners | | 2 | 4 |
| | | | |
| Speed | [rpm] | 90 | 90 |
| Output | [gr/mi] | 538 | 785 |
| Die swell | [%] | 38 | 37 |
| * Swelling | | 4 | 4 |
| * 30° Edge | | 2 | 4 |
| * Surface | | 3 | 4 |
| * Corners | | 1 | 4 |

At a screw speed of 30 rpm the K8340 compound already displayed instabilities at the sharpest angle, while the compound according to the invention did not showed any instabilities even up to screw speeds of 90 rpm, which is the maximum rpm of the extruder).

### Comparative Experiments E - J

Example 1 and Comparative experiments A and B were repeated, but now with a compound composition as given in Table 9 (Comparative experiments E, F and G) and with the unfilled polymers DE 6002, K4802 and K7506 respectively (Comparative experiments H, I and J).

**Table 9**

| Ingredient | phr |
|---|---|
| Polymer | 100 |
| N-550 | 215 |
| Sunpar2280 | 125 |
| ZnO | 5 |
| Stearic Acid | 1 |
| CaO | 4 |
| Total | 450 |

The results are given in Figure 3 for K4802 unfilled(◆), K7506 unfilled(■) and DE6002 unfilled (▲) and for K4802 450 phr(◇), K7506 450 phr (□) and DE6002 450 phr (Δ).

This figure shows that the polymer has no influence on the processing properties for compound loadings of 450 phr. Figure 3 further demonstrates that unloaded rubber can hardly be processed at all.

## Claims

1. An elastomeric compound comprising at least one olefinic elastomer comprising ethylene, an α-olefin, from 1 to 7 wt% vinyl norbornene and from 0 to 15 wt% of a second non-conjugated polyene, wherein the wt% are related to the total weight of ethylene, α-olefin, vinyl norbornene and the second non-conjugated polyene, and which elastomer has long chain branching corresponding with Δδ <20, wherein Δδ, expressed in degrees, is calculated from the difference between the phase angle δ between stress and strain in a dynamic shear measurement at 125°C at a frequency of 0.1 rad/s and the phase angle δ at a frequency of 100 rad/s, the compound further comprising a solid filler and an oil, such that the compound has a compound loading between 120 and 300 phr, **characterized in that** the said olefinic elastomer satisfies the following relation S_{b} > 30, wherein S_{b} is the slope in a graph of In(ac) versus Φ, in which a_{c} is the factor along which the low frequency part (ω < 1 rad/s) of the phase angle δ versus ω plots, measured at at least one volume fraction Φ between 0.2 and 1 of the olefinic elastomer in squalane, must be shifted to coincide with a δ versus ω plot of an undiluted polymer (Φ =1), and wherein the δ versus w plots results from a frequency sweep performed on a stress controlled rheometer carried out at 125 °C under nitrogen atmosphere, using a parallel plate geometry in shear.

2. Compound according to claim1 wherein the olefinic elastomer has a ML(1+4)125°C according to ASTM D-1646 in the range of from 30 to 130 MU.

3. Method for the preparation of a compound according to claim 1, by mixing 100 phr elastomeric polymer with between 20 and 200 phr of a solid filler, an oil and other compounding ingredients, **characterized in that** the elastomeric polymer is prepared by polymerising at least ethylene, an alpha-olefin and vinyl norbornene in the presence of a catalyst system comprising:
a metal-organic compound of the following formula: 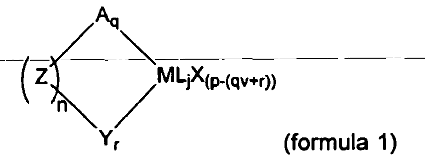 where:
M is a metal of group 3 -13 or the lanthanide series, and p is the valency of the metal M;
A represents a neutral or anionic spectator ligand whose valency v is 0,1 or 2,
and q is an integer denoting the number of spectator ligands A;
Z is an optional bridging moiety, and n is the integer number of parallel bridging moieties Z;
Y is an amidine-containing spectator ligand represented by formula 2: 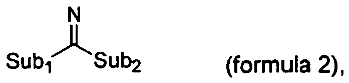 wherein the amidine-containing ligand is covalently bonded to the metal M via the imine nitrogen atom, Sub₁ is a substituent, which comprises a group 14 atom through which Sub₁ is bonded to the imine carbon atom. Sub₂ is a substituent, which comprises a heteroatom of group 15-16, through which Sub₂ is bonded to the imine carbon atom;
r is an integer > 0;
L is an optional neutral Lewis basic ligand, and j is an integer denoting the number of neutral ligands L, and
X is an anionic ligand that may be independently selected from the group consisting of hydride, halide, alkyl, silyl, germyl, aryl, amide, aryloxy, alkoxy, phosphide, sulfide, acyl, pseudo halides such as cyanide, azide, and acetylacetonate, or a combination thereof.
and a cocatalyst comprising an aluminoxane.

4. Extruded part comprising a cured compound according to claim 1 or 2.

## Patentansprüche

1. Elastomermasse, umfassend mindestens ein olefinisches Elastomer, das Ethylen, ein α-Olefin, 1 bis 7 Gew.-% Vinylnorbornen und 0 bis 15 Gew.-% eines zweiten nichtkonjugierten Polyens umfasst, wobei die Gewichtsprozentanteile sich auf das Gesamtgewicht von Ethylen, α-Olefin, Vinylnorbornen und den zweiten nichtkonjugierten Polyen beziehen, und eine Langkettenverzweigung aufweist, die Δδ < 20 entspricht, wobei Δδ, ausgedrückt in Grad, aus der Differenz zwischen dem Phasenwinkel δ zwischen Spannung und Deformation bei einer dynamischen Schermessung bei 125°C und einer Frequenz von 0,1 rad/s und dem Phasenwinkel δ bei einer Frequenz von 100 rad/s berechnet wird, wobei die Masse ferner einen festen Füllstoff und ein Öl umfasst, so dass die Masse eine Massebeladung zwischen 120 und 300 phr aufweist, **dadurch gekennzeichnet, dass** das olefinische Elastomer die folgende Gleichung erfüllt: S_{b} > 30, worin S_{b} für die Steigung in einem Diagramm von ln(a_{c}) gegen Φ steht, wobei a_{c} der Faktor ist, um den der Niederfrequenzteil (ω < 1 rad/s) der Auftragungen des Phasenwinkels δ gegen ω, gemessen bei mindestens einer Volumenfraktion Φ zwischen 0,2 und 1 des olefinischen Elastomers in Squalan, verschoben werden muss, damit er mit einer Auftragung von δ gegen ω eines unverdünnten Polymers (Φ = 1) zusammenfällt, und worin sich die Auftragungen von δ gegen ω aus einem auf einem spannungsgesteuerten Rheometer bei 125°C unter Stickstoffatmosphäre unter Verwendung einer Parallelplattengeometrie in Scherung durchgeführten Frequenz-Sweep ergeben.

2. Masse nach Anspruch 1, wobei das olefinische Elastomer einen ML(1+4)125°C-Wert gemäß ASTM D-1646 im Bereich von 30 bis 130 MU aufweist.

3. Verfahren zur Herstellung einer Masse nach Anspruch 1 durch Mischen von 100 phr elastomerem Polymer mit zwischen 20 und 200 phr eines festen Füllstoffs, eines Öls und anderer Compoundierungsbestandteile, **dadurch gekennzeichnet, dass** man das elastomere Polymer durch Polymerisation von zumindest Ethylen, einem alpha-Olefin und Vinylnorbornen in Gegenwart eines Katalysatorsystems, umfassend:
eine metallorganische Verbindung der folgenden Formel: 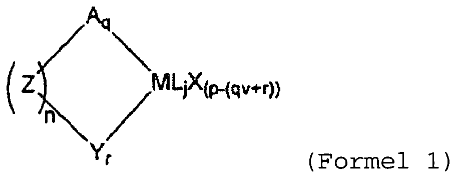 wobei:
M für ein Metall der Gruppe 3-13 oder der Lanthanidenreihe steht und p für die Wertigkeit des Metalls M steht,
A für einen neutralen oder anionischen Zuschauerliganden mit einer Wertigkeit v von 0,1 oder 2 steht und q für eine ganze Zahl steht, die die Zahl der Zuschauerliganden A angibt;
Z für eine fakultative Brückeneinheit steht und n für die ganze Zahl paralleler Brückeneinheiten Z steht;
Y für einen amidingruppenhaltigen Zuschauerliganden der Formel 2: 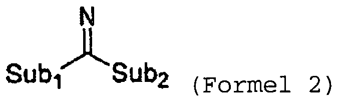 steht, wobei der amidingruppenhaltige Ligand über das Imin-Stickstoffatom kovalent an das Metall M gebunden ist, Sub₁ für einen Substituenten steht, der ein Atom der Gruppe 14 umfaßt, über das Sub₁ an das Imin-Kohlenstoffatom gebunden ist, Sub₂ für einen Substituenten steht, der ein Heteroatom der Gruppen 15-16 umfaßt, über das Sub₂ an das Imin-Kohlenstoffatom gebunden ist;
r für eine ganze Zahl > 0 steht;
L für einen fakultativen neutralen Lewis-basischen Liganden steht und j für eine ganze Zahl steht, die die Zahl der neutralen Liganden L angibt, und X für einen anionischen Liganden steht, der unabhängig aus der Gruppe bestehend aus Hydrid, Halogenid, Alkyl, Silyl, Germyl, Aryl, Amid, Aryloxy, Alkoxy, Phosphid, Sulfid, Acyl, Pseudohalogeniden wie Cyanid, Azid und Acetylacetonat oder einer Kombination davon ausgewählt sein kann,
und einen Cokatalysator, der ein Aluminoxan umfasst,
herstellt.

4. Extrudiertes Teil, umfassend eine gehärtete Masse nach Anspruch 1 oder 2.

## Revendications

1. Composé élastomère comprenant au moins un élastomère oléfinique qui comprend de l'éthylène, une α-oléfine, de 1 à 7 % en poids de vinylnorbornène et de 0 à 15 % en poids d'un second polyène non conjugué, les % en poids étant relatifs au poids total d'éthylène, d'α-oléfine, de vinylnorbornène et du second polyène non conjugué, et ledit élastomère ayant une ramification à chaîne longue correspondant à Δδ < 20, Δδ, exprimé en degrés, étant calculé à partir de la différence entre l'angle de phase δ entre la contrainte et la déformation dans une mesure de cisaillement dynamique à 125 °C à une fréquence de 0,1 rad/s et l'angle de phase δ à une fréquence de 100 rad/s, le composé comprenant également une matière de remplissage solide et une huile, de manière à ce que le composé ait une charge de composé comprise entre 120 et 300 phr, **caractérisé en ce que** ledit élastomère oléfinique satisfait la relation suivante S_{b} > 30, S_{b} étant la pente dans un graphe de ln(a_{c}) en fonction de □, a_{c} étant le facteur avec lequel la partie basse fréquence (□ < 1 rad/s) des graphes de l'angle de phase δ en fonction de □, mesurés à au moins une fraction volumique □ comprise entre 0,2 et 1 de l'élastomère oléfinique dans du squalane, doit être déplacée pour coïncider avec un graphe de δ en fonction de □ d'un polymère non dilué (□ = 1), et les graphes de δ en fonction de □ résultant d'un balayage de fréquence réalisé sur un rhéomètre à contrainte imposée, réalisé à 125 °C dans une atmosphère d'azote, en utilisant une géométrie à plaques parallèles en cisaillement.

2. Composé selon la revendication 1, dans lequel l'élastomère oléfinique a un ML(1+4)125 °C selon ASTM D-1646 dans la plage allant de 30 à 130 MU.

3. Procédé de préparation d'un composé selon la revendication 1, par mélange de 100 phr d'un polymère élastomère avec entre 20 et 200 phr d'une charge solide, d'une huile et d'autres ingrédients de formulation, **caractérisé en ce que** le polymère élastomère est préparé par polymérisation d'au moins de l'éthylène, une alpha-oléfine et du vinylnorbornène en présence d'un système catalytique comprenant :
un composé métallo-organique de la formule suivante : 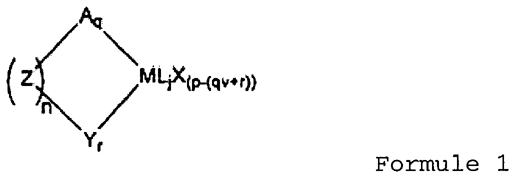 dans laquelle :
M est un métal du groupe 3 à 13 ou de la série des lanthanides, et p est la valence du métal M ;
A représente un ligand spectateur neutre ou anionique dont la valence v est de 0,1 ou 2, et q est un entier représentant le nombre de ligands spectateurs A ;
Z est une éventuelle fraction de pontage, et n est le nombre entier de fractions de pontage Z parallèles ;
Y est un ligand spectateur contenant de l'amidine représenté par la formule 2 : 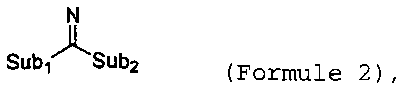 le ligand contenant de l'amidine étant relié de manière covalente au métal M par l'atome d'azote de l'imine, Sub₁ étant un substituant qui comprend un atome du groupe 14 par lequel Sub₁ est relié à l'atome de carbone de l'imine, Sub₂ étant un substituant qui comprend un hétéroatome du groupe 15 à 16 par lequel Sub₂ est relié à l'atome de carbone de l'imine ;
r est un entier > 0 ;
L est un ligand basique de Lewis neutre optionnel, et j est un entier représentant le nombre de ligands neutres L, et
X est un ligand anionique qui peut être choisi indépendamment dans le groupe constitué par hydrure, halogénure, alkyle, silyle, germyle, aryle, amide, aryloxy, alcoxy, phosphure, sulfure, acyle, pseudo halogénures tels que cyanure, azide, et acétylacétonate, ou une de leurs combinaisons,
et un cocatalyseur comprenant un aluminoxane.

4. Pièce extrudée comprenant un composé durci selon la revendication 1 ou 2.
